(19) **Europäisches Patentamt / European Patent Office / Office européen des brevets**

(11) **EP 1 921 771 A2**

(12) **EUROPEAN PATENT APPLICATION**

(43) Date of publication:
**14.05.2008 Bulletin 2008/20**

(51) Int Cl.:
*H04B 7/005* (2006.01)

(21) Application number: **07021581.9**

(22) Date of filing: **06.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **07.11.2006 JP 2006301424**

(71) Applicant: **NEC Corporation**
**Minato-ku**
**Tokyo (JP)**

(72) Inventor: **Shindo, Masato**
**Minato-ku**
**Tokyo (JP)**

(74) Representative: **Glawe, Delfs, Moll**
**Patentanwälte**
**Postfach 26 01 62**
**80058 München (DE)**

(54) **Outer-loop power control**

(57) A radio communication system includes a user apparatus, a base transceiver station and a radio network controller. The base transceiver station requests the user apparatus to resend data when the base transceiver station does not receive the data, and counts the number of sending of the data sent from the user apparatus. The radio network controller receives, from the base transceiver station, the number of sending of the data sent from the user apparatus, and determines a target Signal to Interference Ratio (SIR) based on the number of sending of the data sent from the user apparatus.

Fig.2

EP 1 921 771 A2

**Description**

RELATED APPLICATIONS

This application is based on Japanese Patent Application No. JP 2006-301424 filed on November 7, 2006, and including a specification, claims, drawings and summary. The disclosure of the above Japanese Patent Application is incorporated herein by reference in its entirety.

BACKGROUND OF THE INVENTION

1. FIELD OF THE INVENTION

The present invention relates to a radio communication system and in particular, a radio communication system which controls electric power.

2. DESCRIPTION OF THE RELATED ART

A mobile communications system, for example, W-CDMA (Wideband Code Division Multiple Access) system, controls electric power so that the electric power of transmitted signal (hereinafter, referred as transmitting power) for communication between Node B (base transceiver station) and UE (User Equipment) should be optimized. Such power control includes an outer loop power control and an inner loop power control. According to the inner loop power control, the transmitting power is controlled based on a target SIR (Signal to Interference Ratio). Meanwhile, according to the outer loop power control, the target SIR is updated sequentially. The communication between the Node B and the UE includes an upward direction communication and a downward direction communication. Each of the outer loop power control and the inner loop power control is applied to the communication in each direction.

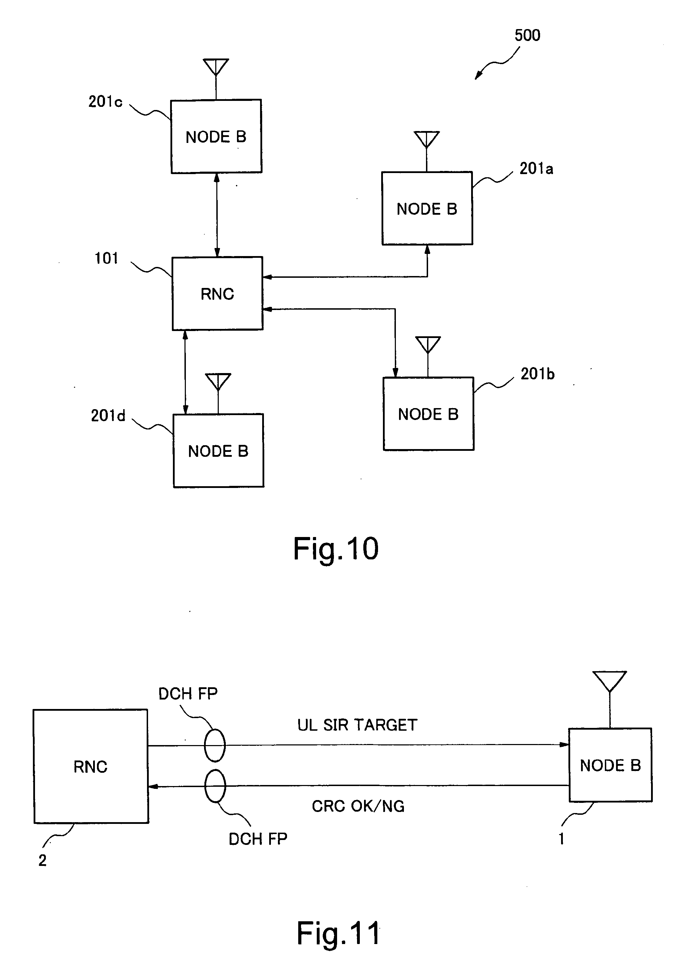

Fig. 11 shows an example of a configuration diagram of the W-CDMA mobile communications system according to a related art. Hereinafter, the outer loop power control through the upward direction communication will be described with reference to Fig. 11. The W-CDMA mobile communications system includes a Node B 1 and a RNC (Radio Network Controller) 2. The Node B 1 detects whether there is a transmission error in data received from an UE (not shown). Specifically, the Node B 1 performs CRC (Cyclic Redundancy Checksum) of the received data. The Node B 1 notifies the RNC 2 of a check result based on DCH-FP (Dedicated Channel Frame Protocol). The RNC 2 calculates a target SIR of a communication in an upward direction. The RNC 2 notifies the Node B 1 of the calculated target SIR based on the DCH-FP. The Node B 1 controls the transmitting power of the UE based on the target SIR. Specifically, the Node B 1 measures a SIR of the received data from the UE and then, controls the transmitting power of the UE so that the measured SIR becomes equal to the target SIR.

In recent years, W-CDMA mobile communication system provides an E-DCH (Enhanced Dedicated Channel) service which improves an existing DCH service, in order to obtain high speed communication. The E-DCH service carries out a H-ARQ (Hybrid Automatic Repeat Request) in a physical layer. That is, when an error occurs in the data transmitted to the Node B from the UE, the data is resent.

According to introduction of the above-mentioned service, user data is transmitted from the UE to the Node B through the E-DCH, while a DCH (Dedicated Channel) is used for only SRB (Signaling Radio Bearer) data which is less frequently used than frequency of use of the user data. That is, frequency in transmitting data through the DCH is lower than one through the E-DCH. Accordingly, frequency in performing the CRC of the data received through the DCH decreases, and consequently, frequency in updating the target SIR decreases. For this reason, the transmitting power of the UE cannot be adjusted to the appropriate value.

Moreover, there a similar problem in case that the Node B performs the CRC of the data received through the E-DCH. In transmission through the E-DCH, the H-ARQ is carried out as mentioned above. Since the Node B performs the CRC for the resent data from the UE, frequency in finding an error in the data sent through the E-DCH is lower than one through the DCH in which resending of the data is not performed. Accordingly, when the Node B performs the CRC of the data received through the E-DCH, the target SIR may not be instantly adjusted to the appropriate value.

Japanese Patent Application Laid-Open No. 2004-128993 discloses that a base station which transmits data through a down link counts the number of resending of data, and sets a transmitting power margin based on the number of the resending. However, only the transmitting power margin is determined based on the number of the resending, the target SIR is not determined. Moreover, the document does not refer at all to determining the target SIR based on the communication quality of the data transmitted through the E-DCH. That is, the document cannot handle above-mentioned problem.

SUMMARY OF THE INVENTION

An exemplary object of the present invention is to provide a radio communication system, a method for determining a target SIR, a radio network controller and a base transceiver station which are capable of controlling transmitting power of a user apparatus appropriately.

In an exemplary aspect of the invention, a radio communication system includes a user apparatus, a base transceiver station and a radio network controller. The base transceiver station requests the user apparatus to resend data when the base transceiver station does not receive the data, and counts the number of sending of the data sent from the user apparatus. The radio network controller receives, from the base transceiver station, the number of sending of the data sent from the user apparatus, and determines a target Signal to Interference Ratio (SIR) based on the number of sending of the data sent from the user apparatus.

Other exemplary features and advantages of the present invention will be apparent from the following description taken in conjunction with the accompanying drawings, in which like reference characters designate the same or similar parts throughout the figures thereof.

BRIEF DESCRIPTION OF THE DRAWINGS

Exemplary features and advantages of the present invention will become apparent from the following detailed description when taken with the accompanying drawings in which:

Fig. 1 shows an example of a configuration diagram of a radio communication system according to a first exemplary embodiment of the present invention;
Fig. 2 shows an explanatory diagram with regard to each data transmitted and received between a RNC and a Node B, and each channel which is used for transmission of each data;
Fig. 3 shows an example of a configuration diagram of the communication channels between nodes of the radio communication system;
Fig. 4 shows an example of a channel relation diagram which describes mapping between a transport channel used in a radio link and a physical channel;
Fig. 5 is a block diagram showing an example of a configuration of the RNC;
Fig. 6 is a block diagram showing an example of a configuration of the Node B;
Fig. 7 is a flowchart showing an example of operation of the Node B;
Fig. 8 is a flowchart showing an example of operation of the RNC;
Fig. 9 is a flowchart showing an example of a detailed procedure in which a target SIR is calculated based on NHR;
Fig. 10 shows an example of a configuration diagram of a radio communication system according to a second exemplary embodiment of the present invention; and
Fig. 11 shows an example of a configuration diagram of a W-CDMA mobile communications system according to the related art.

DETAILED DESCRIPTION OF THE EXEMPLARY EMBODIMENTS

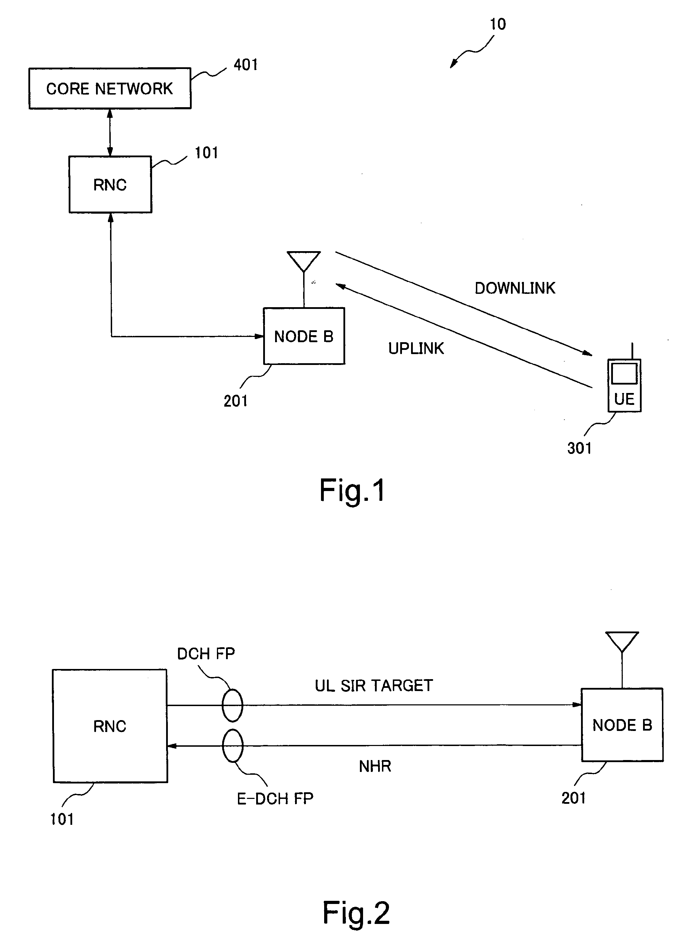

Hereinafter, embodiments of the present invention will be described in detail with reference to drawings. Fig. 1 shows an example of a configuration diagram of a radio communication system 10 according to a first exemplary embodiment of the present invention. The radio communication system 10 includes RNC (radio network controller) 101, Node B (base transceiver station) 201, UE (user equipment) 301 and CN (core network) 401. The RNC 101 connects with the CN 401 and the Node B 201 through a wired link such as an optical fiber cable. The Node B 201 connects with the UE 301 through a radio link. The radio link includes an up-link and a down link. In the up-link, transmitting data is transmitted to the Node B 201 from the UE 301. In the down link, transmitting data is transmitted to the UE 301 from the Node B 201. In a following example, HSDPA (High Speed Downlink Packet Access) service is provided through the down link, and E-DCH (Enhanced Dedicated Transport Channel) service is provided through the up-link.

Fig. 2 is a diagram which illustrates each data transmitted and received between the RNC 101 and the Node B 201, and illustrates each channel which is used for transmission of each data. The Node B 201 counts NHR (Number of H-ARQ Retransmissions) of user data received from the UE 301 through the E-DCH, and transmits the NHR to the RNC 101 in accordance with E-DCH-FP (Enhanced Dedicated Transport Channel Frame Protocol). When the user data from the UE 301 is not received normally, the Node B 201 issues an instruction for the UE 301 to resend the user data. That is, the communication quality of the radio link is closely linked to the NHR.

The RNC 101 determines a target SIR (Signal to Interference Ratio) based on the NHR received from the Node B 201. The RNC 101 transmits a target SIR to the Node B 201 according to DCH-FP (Dedicated Channel Frame Protocol). The Node B 201 controls transmitting power of the UE 301 based on the received target SIR.

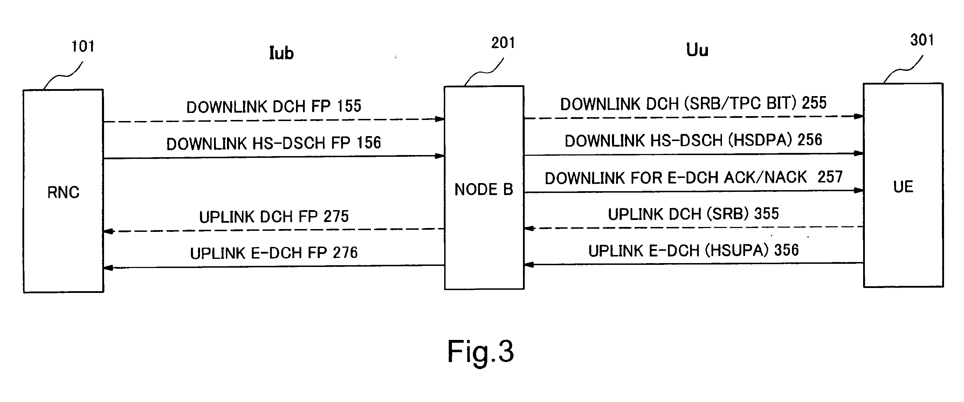

Fig. 3 shows an example of a configuration diagram of communication channels between nodes of the radio communication system 10. Transport channels used in the radio communication system 10 includes a DCH (Dedicated Channel), the E-DCH and a HS-DSCH (High Speed Downlink Shared Channel). The HS-DSCH is used for the HSDPA service.

First, a channel configuration between the RNC 101 and the Node B 201 will be described. The RNC 101 transmits SRB (Signaling Radio Bearer) data and the target SIR to the Node B 201 according to DCH-FP 155. The RNC 101 transmits data used for the HSDPA service to the Node B 201 according to HS - DSCH - FP (High Speed Downlink Shared Channel Frame Protocol) 156. The RNC 101 receives the SRB data from the Node B 201 according to DCH-FP 275. The RNC 101 receives the user data and the number of sending from the Node B 201 according to E - DCH - FP (Enhanced Dedicated Channel Frame Protocol) 276.

Next, a channel configuration between the Node B 201 and the UE 301 will be described. The Node B 201 transmits SRB setting data and TPC (Transmission Power Control) bit to the UE 301 through DCH 255. The Node B 201 transmits the data used for the HSDPA service to the UE 301 through HS-DSCH 256. The Node B 201 transmits an ACK signal and an NACK signal to the UE 301 through Downlink for E-DCH ACK/NACK 257. The Node B 201 receives the SRB data from the UE 301 through DCH 355. The Node B 201 receives the user data from the UE 301 through E-DCH 356.

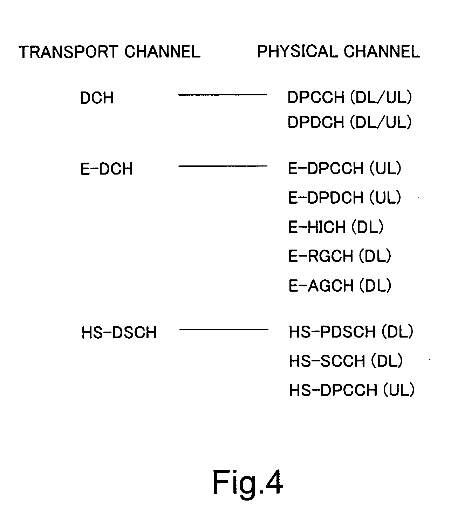

Fig. 4 shows an example of a channel relation diagram which describes mapping a transport channel used in a radio link onto a physical channel. In Fig. 4, "DL" and "UL" means a down link and an up-link respectively. Each transport channel of the DCH, the E-DCH and the HS-DSCH is mapped onto each illustrated physical channel. For example, the Node B 201 uses a DPCCH (Dedicated Physical Control Channel), onto which the DCH is mapped, for transmission of the TPC bit data. For another example, the Node B 201 uses E-HICH (E-DCH Hybrid ARQ Indicator Channel), onto which the E-DCH is mapped, for transmission of the ACK signal and the NACK signal.

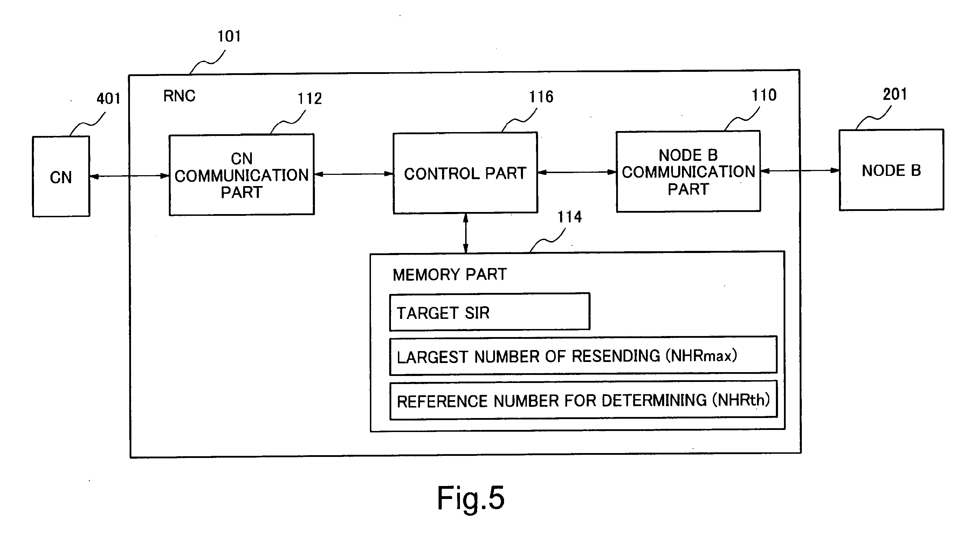

Fig. 5 shows an example of a control block diagram of the RNC 101. The RNC 101 includes a Node B communication part 110, a CN communication part 112, a memory part 114 and a control part 116. The Node B communication part 110 receives the user data and the NHR of the UE 301 from the Node B 201. Moreover, the Node B communication part 110 transmits the target SIR determined by the control part 116 to the Node B 201. The CN communication part 112 transmits, to the CN 401, the user data of the UE 301 which is received via the Node B 201. The memory part 114 stores the target SIR, the largest number of resending (NHRmax), and a reference number for determining (NHRth). According to the exemplary embodiment of the present invention, the NHRmax is selected to be 13. The 3GPP standard Release 6 (3GPP TS25.427 in V6.6.0 (3rd Generation Partnership Project; Technical Specification Group Radio Access Network; UTRAN Iub / Iur interface user plane protocol for DCH data streams (Release 6)) specifies that the number of resending is set within range from 0 to 15. Within the range, the number of resending "13" and "14" are preliminary numbers. Thus, the number of resending "13" is assigned to the NHRmax, in the exemplary embodiment. The NHRth is usually larger than 0 and smaller than the NHRmax. For example, NHRth may be assigned to a fixed value and may be adjusted adaptively based on a state of wireless communication or the like.

The control part 116 determines the target SIR based on the NHR received from the Node B 201 and then, updates the target SIR stored in the memory part 114. Specifically, the control part 116 determines whether or not the NHR received from the Node B 201 via the Node B communication part 110 is larger than the NHRth stored in the memory part 114.

When the NHR is smaller than the NHRth, the control part 116 makes a new value of the target SIR smaller than a present value of the target SIR. Specifically, the control part 116 calculates the new target SIR according to the following formula 1,

$$\mathrm{UL\ SIR\ Target\ =\ UL\ SIR\ Target\_0\ -\ (\ \Delta \times C1\ )/(1-C1)}$$

$$\mathrm{(formula\ 1)}$$

where "UL SIR Target" indicates the new target SIR, and "UL SIR Target_0" indicates the present target SIR, $\Delta$ is a positive constant number and C1 ranges from 0 to 1. As $\Delta$ becomes large, fluctuation ratio due to an update of the target SIR becomes large.

When the NHR is equal to NHRth, and when the NHR is larger than or equal to the NHRmax, the control part 116 keeps the target SIR.

Meanwhile, when the NHR is larger than the NHRth, the control part 116 makes the new target SIR larger than the present target SIR. Specifically, the control part 116 calculates the new target SIR according to following formula 2,

$$\text{UL SIR Target} = \text{UL SIR Target\_O} + \Delta \qquad \text{(formula 2)}$$

where "UL SIR Target" and "UL SIR Target_0" indicate the new target SIR and the present target SIR respectively, $\Delta$ is a positive constant number.

The control part 116 updates the target SIR stored in the memory unit 114 so that the new target SIR determined above becomes the present target SIR.

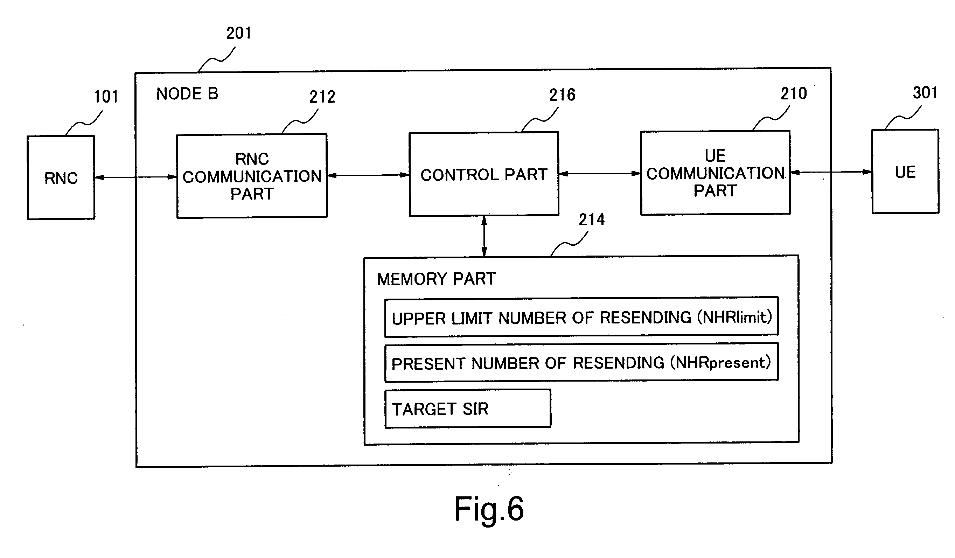

Fig. 6 shows an example of a control block diagram of the Node B 201. The Node B 201 includes a UE communication part 210, a RNC communication part 212, a memory part 214 and a control part 216. The UE communication part 210 receives the user data from the UE 301, decodes the user data, and outputs the decoded user data to the control part 216. The UE communication part 210 transmits an ACK signal or a NACK signal to the UE 301. Moreover, the UE communication part 210 transmits the TPC (Transmission Power Control) bit data generated by the control part 216 to the UE 301. The RNC communication part 212 transmits both of the user data and the NHR to the RNC 101. Further, the RNC communication part 212 receives the target SIR from the RNC 101. The memory part 214 stores the upper limit number of resending (NHRlimit), the present number of resending (NHRpresent), and the target SIR.

The control part 216 carries out control of resending the user data transmitted by the UE 301, and then, counts the number of resending, and transmits the counted number to the RNC 101.

Specifically, the control part 216 judges whether or not the user data from the UE 301 is received normally, for example, by carrying out CRC. When the user data is received normally (that is, the CRC check finds no data error), the control part 216 generates and transmits the ACK signal to the UE 301 via the UE communication part 210. Meanwhile, when the user data is not received normally (that is, when the CRC finds an error in the data), the control part 216 generates and transmits the NACK signal to the UE 301 via the UE communication part 210. When the NHRpresent is smaller than the NHRlimit, the control part 216 increases the NHRpresent by one every time of the resending.

Moreover, the control part 216 controls the transmitting power of the UE 301 based on the target SIR stored in the memory part 214. Specifically, the control part 216 determines whether or not the SIR of the user data received from the UE 301 via the UE communication part 210 is larger than the target SIR. When the SIR of the user data is larger than the target SIR, the control part 216 generates the TPC bit which instructs to increase the transmitting power. Meanwhile, when the SIR of the user data is smaller than or equal to the target SIR, the control part 216 generates the TPC bit which instructs to decrease the transmitting power. The control part 216 transmits the generated TPC bit to the UE 301 via the UE communication part 210. When the control part 216 receives the new target SIR from the RNC 101, the control part 216 updates the target SIR stored in the memory part 214 with the new target SIR.

The UE 301 transmits the user data to the Node B 201. When the UE 301 receives the NACK signal from the Node B 201, the UE 301 resends the user data to the Node B 201. Meanwhile, when the UE 301 receives the ACK signal from the Node B 201, the UE 301 transmits next user data to the Node B 201. When the UE 301 receives the TPC bit from the Node B 201, the UE 301 changes the transmitting power thereof based on the TPC bit. Specifically, when the TPC bit instructs to increase the transmitting power, the UE 301 increases the transmitting power thereof. Meanwhile, when the TPC bit instructs to decrease the transmitting power, the UE 301 decreases the transmitting power thereof.

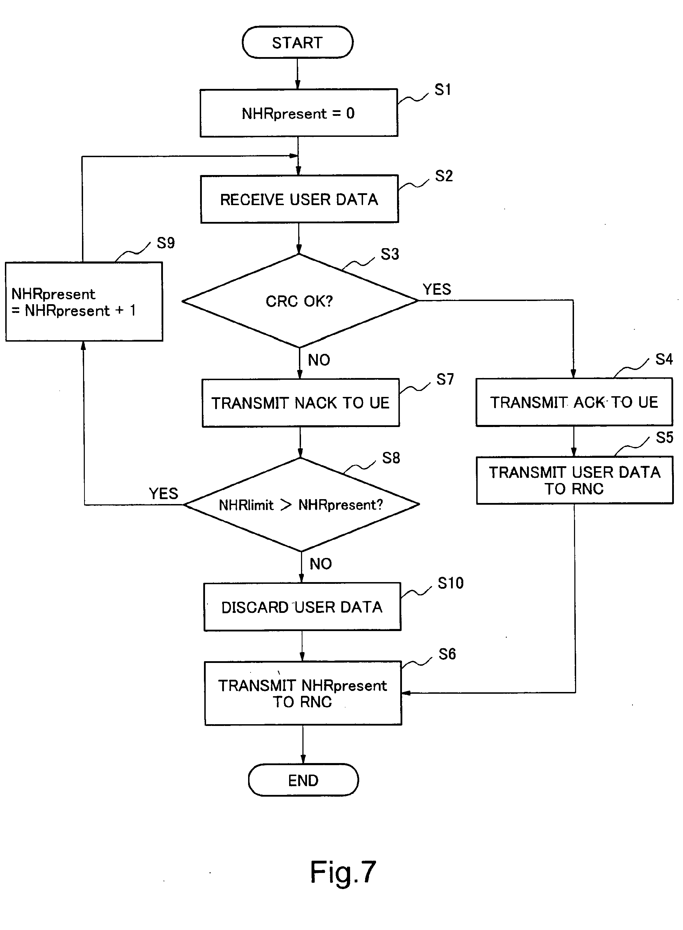

Fig. 7 is a flowchart showing an example of operation of the Node B 201. Initially, the control part 216 initializes the NHRpresent stored in the memory part 214 (Step S1). Further, the NHRlimit and the target SIR are assigned the predetermined value in advance. The UE communication part 210 receives the user data from the UE 301 through the E-DCH 356 (Step S2). The UE communication part 210 decodes the received user data and outputs the decoded user data to the control part 216. The control part 216 performs the CRC of the user data, and judges whether there is a CRC error in the user data (Step S3). When the CRC finds no error (that is, Yes in Step S3), the control part 216 generates the ACK signal and outputs the ACK signal to the UE communication part 210. The UE communication part 210 transmits the input ACK signal to the UE 301 through the Downlink for E-DCH ACK/NACK 257 (Step S4). The control part 216 outputs the user data which is received from UE301 to the RNC communication part 212. The RNC communication part 212 transmits the user data to the RNC 101 based on the E-DCH-FP 276 (Step S5). Afterward, the control part 216 outputs the NHRpresent to the RNC communication part 212. The RNC communication part 212 transmits the NHRpresent to the RNC 101 based on the E-DCH-FP 276 (Step S6). Then, the NHRpresent includes "0" which means no resending. Further, upon receiving the ACK signal, the UE 301 transmits the next user data to the Node B 201.

Meanwhile, when the CRC finds an error (that is, No in Step 3), the control part 216 generates the NACK signal and transmits the NACK signal to the UE communication part 210. The UE communication part 210 transmits the input NACK signal to the UE 301 through the Downlink for E-DCH ACK/NACK 257 (Step S7). The UE 301 which receives the NACK signal resends the same user data to the Node B 201. The control part 216 judges whether the NHRpresent is smaller than the NHRlimit (Step S8). When the NHRpresent is smaller than the NHRlimit (that is, Yes in Step S8), the control part 216 increments the NHRpresent by one (Step S9). Then, the UE communication part 210 receives the resent user data from the UE 301 (Step S2). Meanwhile, when the NHRpresent is larger than or equal to the NHRlimit (that is, No in Step S8), the control part 216 discards the user data (Step S10). Then, the control part 216 outputs the NHRpresent to the RNC communication part 212. The RNC communication part 212 transmits the NHRpresent to the RNC 101 (Step S6).

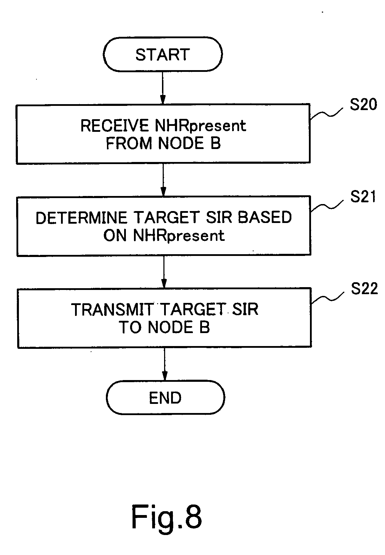

Fig. 8 is a flowchart showing an example of operation of the RNC 101. The Node B communication part 110 receives the NHRpresent from the NodeB 201 based on the E-DCH-FP 276 (Step S20) and outputs the NHRpresent to the control part 116. The control part 116 determines the target SIR based on the NHRpresent (Step S21). The NodeB communication part 110 transmits the target SIR determined by the control part 116 to the NodeB 201 based on the DCH-FP 155 (Step S22).

When the control part 216 of Node B 201 receives the new target SIR from the RNC 101, the control part 216 updates the target SIR stored in the memory part 214 with the new target SIR. Afterward, the control part 216 judges whether the SIR of the user data received from the UE 301 is larger than or equal to the target SIR. When the SIR of the user data is larger than the target SIR, the control part 216 generates the TPC bit which instructs to increase the transmitting power. Meanwhile, when the SIR of the user data is smaller than or equal to the target SIR, the control part 216 generates the TPC bit which instructs to decrease the transmitting power. The UE communication part 210 transmits the TPC bit generated by the control part 216 to the UE 301 through the DCH 255 (specifically, DPCCH). The UE 301 changes the transmitting power thereof based on the TPC bit received from the Node B 201. Specifically, when the UE 301 receives the TPC bit which instructs to increase the transmitting power, the UE 301 increases the transmitting power thereof. Meanwhile, when the UE 301 receives the TPC bit which instructs to decrease the transmitting power, the UE 301 decreases the transmitting power thereof.

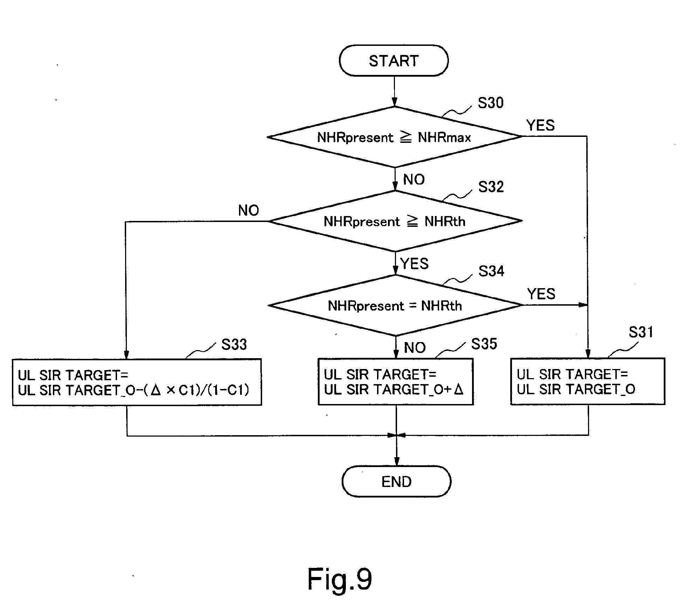

Fig. 9 is a flowchart showing an example of a detailed procedure in which the RNC 101 calculates the target SIR based on the NHRpresent. The control part 116 of the RNC 101 judges whether or not the NHRpresent received from the Node B 201 is larger than or equal to the NHRmax (Step S30). When the NHRpresent is larger than or equal to the NHRmax (that is, Yes in Step S30), the control part 116 does not calculate the new target SIR and keeps the present target SIR (Step S31).

When the NHRpresent is smaller than the NHRmax (that is, No in Step S30), the control part 116 judges whether the NHRpresent is larger than or equal to the NHRth (Step S32). When the NHRpresent is smaller than the NHRth (that is, No in Step S32), the control part 116 calculates the targer SIR according to the formula 1 (Step S33).

When the NHRpresent is larger than or equal to the NHRth (that is, Yes in Step S32), the control part 116 judges whether or not the NHRpresent is equal to the NHRth (Step S34). When the NHRpresent is equal to the NHRth (that is, Yes in Step S34), the control part 116 does not calculate the new target SIR and keeps the present target SIR (Step S31). When the NHRpresent is smaller than the NHRth (that is, No in Step S34), the control part 116 calculates the target SIR according to the formula 2 (Step S35).

As described above according to the exemplary embodiment, the Node B 201 counts the NHR of the user data and transmits the NHR to the RNC 101. The RNC 101 determines the target SIR based on the received NHR. Even though the user data is transmitted through the E-DCH which has a function of the H-ARQ, the transmitting power of the UE 301 can be controlled appropriately, since the NHR is just a parameter which reflects present quality of the communication remarkably.

Fig. 10 shows an example of a configuration diagram of a radio communication system 500 according to a second exemplary embodiment of the present invention. The radio communication system 500 includes a RNC 101 and Node B 201a to Node B 201d. At least one of the Node B 201a to the Node B 201d includes the H-ARQ function. Hereinafter, in the embodiment, the only Node B 201a includes the H-ARQ function.

The control part 116 of the RNC 101 calculates the target SIR based on the number of resending received from the Node B 201a and outputs the target SIR to the Node B communication part 110. The Node B communication part 110 transmits the target SIR to each of the Node B 201a to the Node B 201d based on the DCH-FP. The DCH-FP allows communication with the Node B which does not include the H-ARQ function. Thus, the RNC 101 can transmit the target SIR not only to the Node B 201a which counts the number of resending, but also to other Node B 201b to the Node B 201d which does not include the H-ARQ function simultaneously. For example, when an UE is handed over from Node B with the H-ARQ function to Node B without the H-ARQ function, the target SIR before the handover (that is, the target SIR which is determined based on the number of resending) can be reported to the Node B which connects with the UE after the handover (that is, the Node B which does not includes the H-ARQ).

A radio communication system according to a third exemplary embodiment of the present invention includes a base transceiver station which is connected with a mobile terminal, and a radio control apparatus which is connected to the base transceiver station. The base transceiver station includes a first receiving part, a control part, an output part, a second receiving part and a power control part. The first receiving part receives data from the mobile terminal. The control part counts the number of resending of the data which the first receiving part receives. The output part transmits the number of resending counted by the control part to the radio control apparatus. The second receiving part receives the target value for the communication quality of the data from the radio control apparatus. The power control part controls transmitting power of the mobile terminal based on the target value which the second receiving part receives. The radio control apparatus includes a receiving part, a calculation part and a transmitting part. The receiving part receives the number of resending from the base transceiver station. The calculation part calculates the target value based on the number of resending which the receiving part receives. The transmitting part transmits the target value calculated by the calculation part to the base transceiver station.

A power control method according to a fourth exemplary embodiment of the present invention is carried out in a radio communication system including a base transceiver station which is connected to a mobile terminal and a radio control apparatus which is connected to the base transceiver station. The power control method includes a first receiving step, a counting step, an output step, a receiving step, a calculation step, a transmission step, a second receiving step and a power control step. In the first receiving step, the base transceiver station receives data from the mobile terminal. In the counting step, the base transceiver station counts the number of resending of the received data. In the output step, the base transceiver station transmits the counted number of resending to the radio control apparatus. In the receiving step, the radio control apparatus receives the number of resending from the base transceiver station. In the calculation step, the radio control apparatus calculates the target value for the communication quality of the data based on the received number of resending. In the transmission step, the radio control apparatus transmits the calculated target value to the base transceiver station. In the second receiving step, the base transceiver station receives the target value from the radio control apparatus. In the power control step, the base transceiver station controls transmitting power of the mobile terminal based on the received target value.

A radio control apparatus according to a fifth exemplary embodiment of the present invention is connected with a base transceiver station which controls transmitting power of a mobile terminal based on a target value for communication quality of data. The radio control apparatus includes a receiving part, a calculation part and transmitting part. The receiving part receives the number of resending of data from the base transceiver station. The calculation part calculates the target value based on the number of resending which the receiving part receives. The transmitting part transmits the target value calculated by the calculation part to the base transceiver station.

A power control method according to a sixth exemplary embodiment of the present invention is carried out in a radio control apparatus connected to a base transceiver station which controls transmitting power of a mobile terminal based on a target value of communication quality of data. The power control method includes a receiving step, a calculation step and a transmission step. In the receiving step, the number of resending of the data sent from the base transceiver station is received. In the calculation step, the target value is calculated based on the received number of resending. In the transmission step, the calculated target value is transmitted to the base transceiver station.

A base transceiver station according to a seventh exemplary embodiment of the present invention is connected with a mobile terminal and a radio control apparatus which calculates a target value of communication quality of data based on the number of resending of data. The base transceiver station includes a first receiving part, a control part, an output part, a second receiving part and a power control part. The first receiving part receives the data from the mobile terminal. The control part counts the number of resending of the data which the first receiving part receives. The output part transmits the number of resending counted by the control part to the radio control apparatus. The second receiving part receives the target value from the radio control apparatus. The power control part controls transmitting power of the mobile terminal based on the target value which the second receiving part receives.

A power control method according to a eighth exemplary embodiment of the present invention is carried out in a base transceiver station which is connected to a mobile terminal and a radio control apparatus which calculates a target value of communication quality of data based on the number of resending of the data. The power control method includes a first receiving step, a counting step, an output step, a second receiving step and a power control step. In the first receiving step, the data is received from the mobile terminal. In the counting step, the number of resending of the received data is counted. In the output step, the counted number of resending is transmitted to the radio control apparatus. In the second receiving step, the target value is received from the radio control apparatus. In the power control step, transmitting power of the mobile terminal is controlled based on the received target value.

According to the above-mentioned embodiments, a target value for communication quality of data is calculated based on the number of resending of the data. The number of resending corresponds to the number of receiving erroneous data. Thus, when the number of resending becomes large, the communication quality becomes worse. In other words, the number of resending depends on the present communication quality. Even if the E-DCH is used, the transmitting power of the mobile terminal can be adjusted to an appropriate value.

The radio control apparatus includes a memory part storing a present target value and a reference number. When the number of resending received by a receiving part is larger than the reference number, a calculation part calculates a target value which is larger than the present target value. When the number of resending received by the receiving part is smaller than the reference number, the calculation part calculates the target value which is smaller than the present target value. The above mentioned calculation is preferred. According to the above mentioned calculation, regarding the target of communication quality, when the number of resending becomes larger than the reference number, the target value becomes large, and when the number of resending becomes smaller than the reference number, the target value becomes small. As a result, the target value of the communication quality can be adjusted easily to an appropriate value.

The radio control apparatus can be connected with other base transceiver stations. The transmitting part transmits the target value to the base transceiver station and the other base transceiver stations through individual channels of a framing protocol. Accordingly, the target value of the communication quality can be transmitted not only to the base transceiver station which counts the number of resending but also to the other base transceiver stations. That is, the target value of the communication quality can be transmitted simultaneously also to the base transceiver station which does not count the number of resending, for example, the base transceiver stations without the H-ARQ function.

According to the embodiments described above, even if the E-DCH is used, the transmitting power can be adjusted to an appropriate value.

The number of resending above mentioned can include an initial data sending from a mobile terminal. That is, the target value can be calculated or adjusted based on the total number of data sending from the mobile terminal. Further the target value may be adjusted based on the only initial data sending from a mobile terminal without any following data resending.

The previous description of embodiments is provided to enable a person skilled in the art to make and use the present invention. Moreover, various modifications to these embodiments will be readily apparent to those skilled in the art, and the generic principles and specific examples defined herein may be applied to other embodiments without the use of inventive faculty. Therefore, the present invention is not intended to be limited to the embodiments described herein but is to be accorded the widest scope as defined by the limitations of the claims and equivalents.

Further, it is noted that the inventor's intent is to retain all equivalents of the claimed invention even if the claims are amended during prosecution.

While this invention has been described in connection with certain preferred embodiments, it is to be understood that the subject matter encompassed by way of this invention is not to be limited to those specific embodiments. On the contrary, it is intended for the subject matter of the invention to include all alternative, modification and equivalents as can be included within the spirit and scope of the following claims.

Further, it is the inventor's intention to retain all equivalents of the claimed invention even if the claims are amended during prosecution.

**Claims**

1. A radio communication system, comprising:

   a user apparatus;
   a base transceiver station which requests said user apparatus to resend data when said base transceiver station does not receive said data, and counts the number of sending of said data sent from said user apparatus; and
   a radio network controller which receives, from said base transceiver station, said number of sending of said data sent from said user apparatus, and determines a target Signal to Interference Ratio (SIR) based on said number of sending of said data sent from said user apparatus.

2. The radio communication system according to claim 1, wherein
   said data is transmitted from said user apparatus to said base transceiver station through E-DCH (Enhanced Dedicated Transport Channel).

3. The radio communication system according to claim 2, wherein
   said number of sending is transmitted from said base transceiver station to said radio network controller based on E-DCH-FP (Enhanced Dedicated Channel Frame Protocol).

4. The radio communication system according to claim 1, wherein
   said target SIR is transmitted from said radio network controller to said base transceiver station based on DCH-FP (Dedicated Channel Frame Protocol).

5. The radio communication system according to claim 4, wherein
   said radio network controller connects with at least one base transceiver station having a function to request said user apparatus to resend said data, and connect with at least one base transceiver station without said function.

6. The radio communication system according to claim 1, wherein

said radio network controller compares said number of sending of said data with a predetermined reference number, and determines said target SIR according to said comparing result.

7. The radio communication system according to claim 6, wherein
when said number of sending of said data is smaller than said reference number, said radio network controller decreases a current value of said target SIR.

8. The radio communication system according to claim 6, wherein
when said number of sending of said data is greater than said reference number, said radio network controller increases a current value of said target SIR.

9. The radio communication system according to claim 6, wherein
when said number of sending is equal to said reference number, said radio network controller keeps a current value of said target SIR.

10. The radio communication system according to claim 6, wherein
said predetermined reference number can be changed according to a predetermined condition.

11. The radio communication system according to claim 1, wherein
said base transceiver station includes a control part which controls transmitting power of said user apparatus based on said target SIR.

12. The radio communication system according to claim 11, wherein
said control part determines whether a SIR of said data received from said user apparatus is greater than said target SIR or not, wherein
in case that said SIR is greater than said target SIR, said control part generates a TPC bit which instructs to increase said transmitting power, and wherein
in case that said SIR is smaller than or equal to said target SIR, said control part generates a TPC bit which instructs to decrease said transmitting power.

13. A method for determining a target Signal to Interference Ratio (SIR), comprising:

detecting whether data transmitted by a user apparatus is normally received by a base transceiver station;
resending said data to said base transceiver station from said user apparatus, when said data is not normally received;
transmitting the number of sending of said data to a radio network controller from said base transceiver; and
determining said target SIR in said radio network controller based on said total number of sending of said data.

14. The method for determining a target SIR, according to claim 13, wherein
said determining said target SIR includes comparing said number of sending of said data with a predetermined reference number, and determining said target SIR according to said comparison.

15. The method for determining a target SIR, according to claim 14, wherein
said determining said target SIR according to said comparison includes decreasing a current value of said target SIR when said number of sending of said data is smaller than said reference number.

16. The method for determining a target SIR, according to claim 14, wherein
said determining said target SIR according to said comparison includes increasing a current value of said target SIR when said number of sending of said data is greater than said reference number.

17. The method for determining a target SIR, according to claim 14, wherein
said determining said target SIR according to said comparison includes keeping a current value of said target SIR when said number of sending of said data is equal to said reference number.

18. A radio network controller which is connected with a base transceiver station which communicates with a user apparatus through a radio link, comprising:

a transceiver which receives the number of sending of data, which is sent from said user apparatus, from said base transceiver station; and
a control part which determines a target Signal to Interference Ratio (SIR) based on said number of sending of said data,
wherein said transceiver transmits said determined target SIR to said base transceiver station.

19. The radio network controller according to claim 18, wherein
said transceiver receives said number of sending of said data from said base transceiver station based on E-DCH-FP (Enhanced Dedicated Transport Channel Frame Protocol).

20. The radio network controller according to claim 18, wherein
said transceiver transmits said target SIR to said base transceiver station in accordance with DCH-FP (Dedicated Channel Frame Protocol).

21. The radio network controller according to claim 18, wherein
said control part compares said number of sending of said data with a predetermined reference number, and determines said target SIR according to said comparison.

22. The radio network controller according to claim 21, wherein
said control part decreases a current value of said target SIR when said number of sending of said data is smaller than said reference number.

23. The radio network controller according to claim 21, wherein
said control part increases a current value of said target SIR when said number of sending of said data is greater than said reference number.

24. The radio network controller according to claim 21, wherein
said control part keeps a current value of said target SIR when said number of sending of said data is equal to said reference number.

25. The radio network controller according to claim 21, wherein
said reference number can be is changed according to a predetermined condition.

26. A base transceiver station which communicates with a user apparatus through radio link and communicates with a radio network controller, comprising:

a first communication part which communicates with said user apparatus;
a second communication part which communicates with said radio network controller; and
a control part which requests said user apparatus to resend data in case that said data is not normally received, counts the number of said sending of said data sent from said user apparatus, and transmits said number of sending of said data to said radio network controller.

27. The base transceiver station according to claim 26, wherein
said first communication part receives said data from said user apparatus through E-DCH (Enhanced Dedicated Transport Channel).

28. The base transceiver station according to claim 27, wherein
said second communication part transmits said number of sending of said data to said radio network controller in accordance with E-DCH-FP (Enhanced Dedicated Channel Frame Protocol).

29. The base transceiver station according to claim 26, wherein
said second communication part receives a target Signal to Interference Ratio (SIR) from said radio network controller in accordance with DCH-FP (Dedicated Channel Frame Protocol).

30. The base transceiver station according to claim 29, wherein
said control part controls transmitting power of said user apparatus based on said target SIR.

31. The base transceiver station according to claim 30, wherein
said control part determines whether a SIR of said data received from said user apparatus is greater than said target SIR or not, wherein
in case that said SIR is greater than said target SIR, said control part generates a TPC bit which instructs to increase said transmitting power, and wherein
in case that said SIR is smaller than or equal to said target SIR, said control part generates a TPC bit which instructs to decrease said transmitting power.

CORE NETWORK 401

101

RNC

DOWNLINK

NODE B

UPLINK

201

UE

301

Fig.1

DCH FP

RNC

UL SIR TARGET

NODE B

NHR

E-DCH FP

201

101

Fig.2

Fig.3

TRANSPORT CHANNEL          PHYSICAL CHANNEL

DCH          —————          DPCCH (DL/UL)
                            DPDCH (DL/UL)

E-DCH          —————          E-DPCCH (UL)
                              E-DPDCH (UL)
                              E-HICH (DL)
                              E-RGCH (DL)
                              E-AGCH (DL)

HS-DSCH          —————          HS-PDSCH (DL)
                                HS-SCCH (DL)
                                HS-DPCCH (UL)

# Fig.4

EP 1 921 771 A2

101

RNC

CN

401

112
CN
COMMUNICATION
PART

116
CONTROL PART

110
NODE B
COMMUNICATION
PART

201
NODE B

114
MEMORY PART

TARGET SIR

LARGEST NUMBER OF RESENDING (NHRmax)

REFERENCE NUMBER FOR DETERMINING (NHRth)

Fig.5

EP 1 921 771 A2

Fig.6

START

NHRpresent = 0 — S1

RECEIVE USER DATA — S2

S3
CRC OK? — YES

NO

S9
NHRpresent
= NHRpresent + 1

TRANSMIT NACK TO UE — S7

S8
NHRlimit > NHRpresent? — YES

NO

DISCARD USER DATA — S10

TRANSMIT ACK TO UE — S4

TRANSMIT USER DATA TO RNC — S5

TRANSMIT NHRpresent TO RNC — S6

END

Fig.7

START

RECEIVE NHRpresent
FROM NODE B — S20

DETERMINE TARGET SIR BASED
ON NHRpresent — S21

TRANSMIT TARGET SIR
TO NODE B — S22

END

# Fig.8

START

S30

NHRpresent $\geqq$ NHRmax — YES

NO

S32

NHRpresent $\geqq$ NHRth — NO

YES

S34

NHRpresent = NHRth — YES

NO

S35

S33

UL SIR TARGET=
UL SIR TARGET_O−($\Delta \times C1$)/(1−C1)

UL SIR TARGET=
UL SIR TARGET_O+$\Delta$

S31

UL SIR TARGET=
UL SIR TARGET_O

END

Fig.9

500

201c

NODE B

201a

NODE B

101

RNC

201d

NODE B

201b

NODE B

## Fig.10

RNC

DCH FP

UL SIR TARGET

NODE B

CRC OK/NG

DCH FP

2

1

## Fig.11

**REFERENCES CITED IN THE DESCRIPTION**

**Patent documents cited in the description**

- JP 2006301424 A
- JP 2004128993 A